# EUROPÄISCHE PATENTANMELDUNG

(11) **EP 2 284 068 A2**
(43) Veröffentlichungstag der Anmeldung: **16.02.2011**
(21) Anmeldenummer: 09175132.1
(22) Anmeldetag: 05.11.2009
(51) Int. Cl.: B62J 1/08, B62K 19/36

(54) **Hydraulische Teleskop-Sattelstütze**

(30) Priorität: 13.08.2009 DE 202009005132 U
(71) Anmelder: Rose Versand GmbH, 46395 Bocholt (DE)
(72) Erfinder: Heimerdinger, Andreas, 76597 Loffenau (DE)
(74) Vertreter: Kluin, Jörg-Eden

(57) **Zusammenfassung**

Hydraulische Teleskop-Sattelstütze (100) insbesondere für einen Fahrradrahmen (8), mit einem inneren Teleskoprohr (1), mit einem äußeren Teleskoprohr (2), mit einer Stützkammer (3) und einer mit dieser durch ein Ventil (5) wahlweise verbindbaren Ausweichkammer (4a), mit einer Ventilbetätigungsvorrichtung (6), mit einem Sattelstützenkopf (7) und mit einer Sattelbefestigungsvorrichtung (14), wobei die Wände zumindest einer der beiden Kammern (3, 4a) zumindest auch das äußere Teleskoprohr (2) umfassen und das äußere Teleskoprohr (2) das Sattelrohr (10) eines Fahrradrahmens umfasst.

## Beschreibung

Die Erfindung betrifft eine hydraulische Teleskop-Sattelstütze.

Mit dem Begriff "Teleskop-Sattelstütze" wird im Rahmen dieser Druckschrift eine Sattelstütze bezeichnet, deren Vorrichtung zur Höhenverstellung dazu bestimmt ist, während der Fahrt betätigt zu werden. Derartige Sattelstützen kommen insbesondere den Bedürfnissen von Mountainbikefahrern entgegen, die bergab oft eine tiefere Sattelstellung bevorzugen, als bergauf. Derartige Sattelstützen sind bereits bekannt. Beispielsweise zeigt die US 7306206 B2 eine derartige hydraulische Teleskop-Sattelstütze. Nachteilig an derartigen Sattelstützen ist, dass sie relativ aufwendig herzustellen sind. Die Erfindung hat es sich zur Aufgabe gemacht, eine derartige Sattelstütze ohne diesen Nachteil zu schaffen.

Diese Aufgabe wird durch die in Anspruch 1 wiedergegebene Sattelstütze gelöst. Die erfindungsgemäße hydraulische Teleskop-Sattelstütze ist insbesondere für ein Fahrrad bestimmt. Sie umfasst ein inneres Teleskoprohr und ein äußeres Teleskoprohr. Weiterhin umfasst sie eine Stützkammer und eine mit der Stützkammer durch ein Ventil wahlweise verbindbare Ausweichkammer. Zudem ist eine Ventilbetätigungsvorrichtung vorgesehen. Die Sattelstütze weist einen Kopf mit einer Sattelbefestigungsvorrichtung auf. Die Wände zumindest einer der beiden genannten Kammern umfassen zumindest auch das äußere Teleskoprohr. Hierdurch ist eine Voraussetzung für einen besonders einfachen Aufbau geschaffen.

Vorzugsweise steht das innere Teleskoprohr oben teilweise über das äußere Teleskoprohr hervor und an seinem oberen Ende ist der Sattel befestigt.

In der bevorzugten Ausführungsform ist die Stützkammer zumindest auch mit nicht oder schwer komprimierbarer Flüssigkeit, bevorzugt Öl, gefüllt. Vorzugsweise ist die Stützkammer stets, das heißt in allen Betriebszuständen der Sattelstütze, ausschließlich mit Öl gefüllt.

In der bevorzugten Ausführungsform umfassen die Wände der Stützkammer zumindest auch das äußere Teleskoprohr.

In einer besonders wichtigen Ausführungsform umfasst das äußere Teleskoprohr ein Rahmenrohr, besonders bevorzugt das Sattelrohr eines Fahrradrahmens. Die Stützkammer wird also in einer Ausführungsform zumindest auch durch das untere Ende des Sattelrohrs gebildet. Die Sattelstütze ist auf diese Weise in den Fahrradrahmen integriert. Der Fahrradrahmen übernimmt wesentliche Funktionen der Höhenverstellbarkeit der Sattelstütze. Verglichen mit einer Teleskopsattelstütze, bei der das äußere Teleskoprohr durch ein Extrabauteil gebildet wird, sind hierdurch eine deutliche Gewichtseinsparung und ein vereinfachter Aufbau möglich.

In der bevorzugten Ausführungsform ist die Ausweichkammer im inneren Teleskoprohr vorgesehen und wird, besonders bevorzugt, durch dieses gebildet. Die Ausweichkammer umfasst vorzugsweise einen -bis auf die wahlweise mittels des Ventils herstellbare Verbindung zu der Stützkammer- abgeschlossenen Raum.

Bevorzugt befindet sich in der Ausweichkammer neben dem Öl auch ein komprimierbares Medium, vorzugsweise Gas und besonders bevorzugt Luft. Dieses wird aufgrund der Abgeschlossenheit der Ausweichkammer bei eintretendem Öl komprimiert.

Vorzugsweise sind im unteren Bereich des Sattelrohrs, abgesehen von einer Verschlusswand, keine weiteren Bauteile vorgesehen. Das Sattelrohr unterscheidet sich daher von einem herkömmlichen Sattelrohr eines Fahrradrahmens lediglich dadurch, dass in seinem unteren Bereich eine Verschlusswand vorgesehen ist. Der innere untere Bereich des Sattelrohres ist, jedenfalls nach Fertigstellung des Fahrradrahmens, sehr schwer zu erreichen. Indem in diesem Bereich, abgesehen von einer Verschlusswand, keine weiteren Bauelemente vorgesehen sind, wird eine erhebliche Montageerleichterung erreicht. Zudem wird vermieden, dass an dieser schwer erreichbaren Stelle Wartungs- und/oder Austauscharbeiten vorzunehmen sind.

In der bevorzugten Ausführungsform ist das Ventil in dem Kopf der Sattelstütze angeordnet. Der Sattelstützenkopf eignet sich besonders zum Anbringen einer Ventilbetätigungsvorrichtung, da er von dem Fahrer auch während der Fahrt gut zu erreichen ist. Indem das Ventil in dem Sattelstützenkopf angeordnet ist, wird ein einfacher und zuverlässiger, sowie gewichtssparender Aufbau möglich, da es möglich ist, die Kraftübertragungswege zwischen der Ventilbetätigungsvorrichtung und dem Ventil kurz zu halten.

Vorzugsweise weist die Stützkammer einen oberen Bereich auf, der einen Kanal in dem inneren Teleskoprohr umfasst.

Die Größe des Durchmessers des Kanals beträgt vorzugsweise weniger als die Hälfte der Größe des Durchmessers des inneren Teleskoprohres

Die Größe des Durchmessers des Kanals beträgt ganz besonders bevorzugt weniger als ein Drittel der Größe des Durchmessers des inneren Teleskoprohres.

Das Ventil ist bevorzugt so angeordnet, dass es in Verbindung mit dem Kanal steht. Der Kanal wird bevorzugt durch ein Rohr gebildet.

Die derartige Anordnung vereint mehrere Vorzüge. Sie ermöglicht es, das Ventil mit den genannten Vorteilen im Kopf der Sattelstütze anzuordnen, was es erforderlich macht, die Stützkammer bis in den Kopf der Sattelstütze reichen zu lassen.

Indem die Stützkammer lediglich mit stark reduziertem Durchmesser in dem inneren Teleskoprohr verläuft, wird die Menge der zumindest schwer komprimierbaren Flüssigkeit (vorzugsweise Öl) zugunsten eines niedrigen Gesamtgewichts der Sattelstütze deutlich reduziert. Anders als bei einer Anordnung, bei der die Stützkammer ausschließlich im inneren Teleskoprohr ausgebildet ist, kommt die erfindungsgemäße Sattelstütze im Wesentlichen ohne Bauteile im unteren Bereich des äußeren Teleskoprohres aus. Anders als eine denkbare Anordnung, bei der das Ventil im unteren Bereich des inneren Teleskoprohres vorgesehen ist, kommt die erfinderische Sattelstütze ohne eine aufwändige Kraftübertragung zwischen der Ventilbetätigungsvorrichtung und dem Ventil in dem inneren Teleskoprohr aus.

Vorzugsweise verläuft der Kanal durch die gesamte Länge des inneren Teleskoprohres.

Das innere Teleskoprohr ist bevorzugt bis auf eine Öffnung an seiner Unterseite, deren Durchmesser um ein Vielfaches kleiner als der Durchmesser des inneren Teleskoprohrs ist, verschlossen. Bevorzugt ist ein Anschlussstück vorgesehen, welches den Kanal an die Öffnung des inneren Teleskoprohrs anschließt.

In einer besonders wichtigen Ausführungsform ist ein Verbindungskanal vorgesehen, der von dem Ventil im Sattelstützenkopf bis in den untersten Bereich der Ausweichkammer führt. Dieser unterste Bereich der Ausweichkammer ist bevorzugt stets mit Öl gefüllt. Hierdurch wird verhindert, dass das in der Ausweichkammer vorhandene Gas durch das Ventil in die Stützkammer gelangen kann. Vorzugsweise wird der Verbindungskanal durch ein Rohr im inneren Teleskoprohr gebildet, das -besonders bevorzugt- durch nahezu die gesamte Länge des inneren Teleskoprohres verläuft.

In der bevorzugten Ausführungsform ist in der Ausweichkammer bei maximal ausgefahrener Sattelstütze lediglich soviel Öl vorgesehen, wie es erforderlich ist, um den Ölstand bei allen denkbaren Fahrsituationen (Schräglagen des Fahrrads) und Betriebszuständen der Sattelstütze über dem untere Ende des Verbindungskanals zu halten.

Durch das Belasten des inneren Teleskoprohres (Sattels), beispielsweise durch das Fahrergewicht bei geöffnetem Ventil, senkt sich das innere Teleskoprohr in dem äußeren Teleskoprohr. Hierbei strömt Flüssigkeit von der Stützkammer durch das Ventil in den Verbindungskanal und durch diesen in die Ausweichkammer. Das in der Ausweichkammer vorhandene Gas wird komprimiert. Nach Schließen des Ventils bildet die Stützkammer einen abgeschlossenen Raum. Da sie mit zumindest schwer komprimierbarer Flüssigkeit gefüllt ist, ist ihr Volumen zumindest nahezu unveränderbar. Das innere Teleskoprohr ist in dem äußeren Teleskoprohr gegen ein Einschieben und Ausfahren blockiert. Durch das erneute Öffnen des Ventils bei nicht belastetem inneren Teleskoprohr (also Sattel) wird die Flüssigkeit durch das sich ausdehnende komprimierte Gas von der Ausweichkammer durch den Verbindungskanal zurück in die Stützkammer gedrückt. Hierbei wird das innere Teleskoprohr und damit der an diesem befestigte Sattel automatisch angehoben.

Vorzugsweise umfasst die Sattelbefestigungsvorrichtung ein Klemmstück, welches auf einem Klemmstücklager im Kopf der Sattelstütze gelagert ist. Die Flüssigkeitsumlenkung, die die Flüssigkeit von dem Ventil in den Verbindungskanal leitet, verläuft bevorzugt durch das Klemmstücklager. Indem dieses Klemmstücklager zwei Funktionen erfüllt, ist ein weiteres Bauteil entbehrlich.

Es können Mittel vorgesehen sein, die eine Verdrehung des inneren Teleskoprohres gegenüber dem äußeren Teleskoprohr vermeiden. Diese Mittel können einen unrunden Querschnitt beider Teleskoprohre (beispielsweise Tropfenform) oder Vorsprünge an einem der beiden Teleskoprohre, die in komplementäre Aussparungen des anderen Teleskoprohres greifen, umfassen. Auch Linearkugellager oder die unrunde Ausgestaltung lediglich eines der Teleskoprohre sind denkbar.

In der bevorzugten Ausführungsform umfasst die Ventilbetätigungsvorrichtung einen Hebel, der am Sattelstützenkopf angebracht ist.

In einer anderen Ausführungsform umfasst die Ventilbetätigungsvorrichtung einen Hebel, der am Lenker des Fahrrades vorgesehen ist und über einen Bowdenzug oder einem anderen Mittel der Kraft und/oder Signalübertragung mit dem Ventil in Wirkverbindung steht.

Im oberen Bereich des äußeren Teleskoprohres ist zwischen innerem und äußerem Teleskoprohr eine Dichtung vorgesehen, die ein Austreten der zumindest schwer komprimierbaren Flüssigkeit verhindert. Da die Dichtung in diesem gut zugänglichen Bereich angeordnet ist, kann sie gut kontrolliert, gewartet und gegebenenfalls ausgetauscht werden.

In einer wichtigen Ausführungsform ist eine Verbindungsleitung zur wahlweisen Verbindbarkeit der Stützkammer mit der Ausweichkammer vorgesehen und diese verläuft -besonders bevorzugt- zumindest auch außerhalb der Sattelstütze. Hierdurch ist eine Voraussetzung für eine besonders unmittelbare Fernbetätigbarkeit der Sattelstütze geschaffen. Vorzugsweise verläuft die Verbindungsleitung bis in einen Betätigungsbereich des Fahrrades, der von dem Nutzer zur Betätigung der Sattelstütze während der Fahrt gut erreicht werden kann.

In der bevorzugten Ausführungsform ist das Ventil an der Verbindungsleitung und vorzugsweise außerhalb der Sattelstütze angeordnet. Bevorzugt ist das Ventil in dem Betätigungsbereich angeordnet. Hierdurch wird eine besonders unmittelbare Fernbetätigbarkeit der Sattelstütze erreicht. Denn es sind keine Mittel notwendig, deren Funktion ausschließlich in der Übertragung der Betätigung besteht, wie etwa Bowdenzüge zur Fernbetätigbarkeit eines in oder in unmittelbarer Näher der Sattelstütze angeordneten Ventils. Ein weiterer Vorteil ist, dass das Ventil, indem es außerhalb der Sattelstütze vorgesehen ist, auch beispielsweise zu Reparatur-, Wartungs- oder Kontrollzwecken bequem erreicht werden kann.

Vorzugsweise handelt es sich bei dem Betätigungsbereich um den Lenkerbereich eines Fahrrades. Die Verbindungsleitung verläuft bevorzugt bis an den Lenker eines Fahrrades und das Ventil ist bevorzugt an dem Lenker angeordnet.

Wenn die Verbindungsleitung, wie bevorzugt, zumindest abschnittsweise flexibel ist und, wie besonders bevorzugt, Hydraulikschläuche umfasst, dann ist ein zuverlässiger Verlauf der Verbindungsleitung in einen Betätigungsbereich mit geringem Fertigungs- und Montageaufwand möglich.

In der bevorzugten Ausführungsform verläuft die Verbindungsleitung auch innerhalb der Sattelstütze.

Sie umfasst dort bevorzugt ein Führungsrohr.

Das Führungsrohr ist bevorzugt in der Sattelstütze befestigt.

Die Befestigung ist vorzugsweise derart vorgesehen, dass sich das Führungsrohr während der Nutzung der Sattelstütze relativ zu dem Fahrradrahmen nicht bewegt.

Das Führungsrohr ist bevorzugt im äußeren Teleskoprohr und besonders bevorzugt am unteren Ende des äußeren Teleskoprohrs befestigt.

Wenn das Führungsrohr, wie bevorzugt, einstellbar befestigt ist, kann es, neben seiner Funktion als Teil der Verbindungsleitung, eine weitere Funktion übernehmen, nämlich einen einstellbaren Endanschlag bewirken. Das Führungsrohr ist bevorzugt mittels einer Konusmutter geklemmt und dadurch einstellbar befestigt. Die Konusmutter ist bevorzugt zumindest teilweise geschlitzt.

Vorzugsweise reicht das Führungsrohr von dem äußeren Teleskoprohr in das innere Teleskoprohr.

Der Durchmesser des Führungsrohres ist bevorzugt erheblich kleiner, als der Durchmesser des inneren Teleskoprohrs und beträgt besonders bevorzugt etwa ein Drittel der Größe des Durchmessers des inneren Teleskoprohrs.

Das innere Teleskoprohr weist vorzugsweise an seiner Unterseite eine Durchbrechung auf, deren Form und Größe derart auf die Form und Größe des Führungsrohrs abgestimmt sind, dass dieses durch die Durchbrechung geführt werden und gut durch die Durchbrechung gleiten kann. Vorzugsweise ist das Führungsrohr durch die Durchbrechung geführt und diese ist mittels einer Dichtungsvorrichtung abgedichtet, um die Ausbildung einer wahlweise dichten Stützkammer zu ermöglichen.

In der bevorzugten Ausführungsform ist auch das äußere Teleskoprohr ist ein seinem unteren Bereich vorzugsweise mittels einer weiteren Dichtungsvorrichtung abgedichtet, um die Ausbildung einer wahlweise dichten Stützkammer zu ermöglichen.

Vorzugsweise verläuft die Verbindungsleitung von einer Durchbrechung der Seitenwand des äußeren Teleskoprohrs in den Betätigungsbereich, weist dort das Ventil auf und verläuft zu dem äußeren Teleskoprohr zurück, welches sie als Führungsrohr zumindest teilweise durchquert, bevor sie in das innere Teleskoprohr eintritt und dort endet.

In der besonders bevorzugten Ausführungsform ist ein oberer Endanschlag der Sattelstütze vorgesehen, der das Heraustreten des inneren Teleskoprohrs aus dem äußeren Teleskoprohr, also die maximale Höhe der Sattelstütze beschränkt. Um den oberen Endanschlag zu bilden, ist vorzugsweise ein Anschlagsvorsprung an dem Führungsrohr vorgesehen. Vorzugsweise wirkt der Anschlagsvorsprung mit einem vorzugsweise im inneren Teleskoprohr vorgesehen Gegenanschlag zusammen. In der Ausführungsform, in der das Führungsrohr einstellbar befestigt ist, ist hiermit auch der Anschlagsvorsprung und damit der obere Endanschlag auf besonders einfache und zuverlässige Weise einstellbar.

Der Anschlagsvorsprung ist bevorzugt am oberen Ende des Führungsrohrs angeordnet. Der Gegenanschlag ist bevorzugt am unteren Ende des inneren Teleskoprohrs angeordnet.

Vorzugsweise trifft das Sattelrohr mit seinem unteren Ende nicht auf das Tretlagerrohr, wie dies zumindest bei den meisten im Stand der Technik bekannten Fahrradrahmenformen der Fall ist, sondern etwas vor dem Tretlagerrohr auf das Unterrohr. Als zweite Modifikation gegenüber den im Stand der Technik bekannten Rahmenformen endet das Sattelrohr der erfindungsgemäßen Sattelstütze vorzugsweise nicht oberhalb des Rohres, auf das es mit seinem unteren Ende trifft, sondern durchquert dieses, reicht durch dieses also hindurch. Hierdurch ist in einigen Ausführungsformen die Stützkammer von unten zugänglich und es können auf diese Weise in diesem Bereich angeordnete bzw. anzuordnende Teile der Sattelstütze, etwa das Führungsrohr, zu Montage-, Wartungs- oder Reparaturzwecken gut erreicht werden.

Die Erfindung umfasst auch einen Fahrradrahmen, sowie ein Fahrrad mit einer erfindungsgemäßen Sattelstütze.

Die Erfindung soll nun anhand zweier in den Zeichnungen dargestellten Ausführungsbeispielen näher erläutert werden. Es zeigen schematisch:
- Fig. 1: eine Seitenansicht eines Teils eines erfindungsgemäßen Fahrradrahmens mit erfindungsgemäßer Sattelstütze in teilweise geschnittener Darstellung;
- Fig. 2: eine Detailansicht aus Fig. 1;
- Fig. 3: eine andere Detailansicht aus Fig. 1;
- Fig. 4: einen erfindungsgemäßen Fahrradrahmen mit erfindungsgemäßer Sattel- stütze in nicht geschnitten dargestellter Seitenansicht;
- Fig. 5: eine teilweise geschnittene Seitenansicht eines erfindungsgemäßen Fahr- radrahmens bei vollständig ausgezogener Sattelstütze;
- Fig. 6: eine Ansicht wie in Fig. 5, bei vollständig eingefahrener Sattelstütze;
- Fig. 7: eine Prinzipskizze einer weiteren Ausführungsform der erfindungsgemäßen Sattelstütze;
- Fig. 8: eine Seitenansicht eines erfindungsgemäßen Fahrradrahmens mit erfin- dungsgemäßer Sattelstütze nach dem in Fig. 7 gezeigten Prinzip, in teil- weise geschnittener Darstellung bei nahezu vollständig ausgezogener Sa- ttelstütze;
- Fig. 9: eine Ansicht wie in Fig. 8, wobei lediglich ein Teil des Fahrradrahmens gezeigt ist und die Sattelstütze nahezu vollständig eingefahren ist;
- Fig. 10: eine Ansicht wie in Fig. 9 bei vollständig eingefahrener Sattelstütze.

Die erfindungsgemäße hydraulische Teleskopsattelstütze 100 umfasst ein inneres Teleskoprohr 1 und ein äußeres Teleskoprohr 2. Das äußere Teleskoprohr 2 wird durch ein Rahmenrohr 9, nämlich das Sattelrohr 10 eines Fahrradrahmens 8 gebildet. Es ist eine Stützkammer 3 und eine über ein Ventil 5 mit dieser wahlweise verbindbare Ausweichkammer 4a vorgesehen. Die Stützkammer 3 ist ausschließlich mit Öl 3b, 3c, 26 gefüllt. Da das Öl 3b, 3c, 26 bei geschlossenem Ventil 5 nicht entweichen kann und schwer komprimierbar ist, sorgt die Stützkammer 3 bei geschlossenem Ventil 5 dafür, dass das innere Teleskoprohr 1 in Längsrichtung gegenüber dem Sattelrohr 10 blockiert ist.

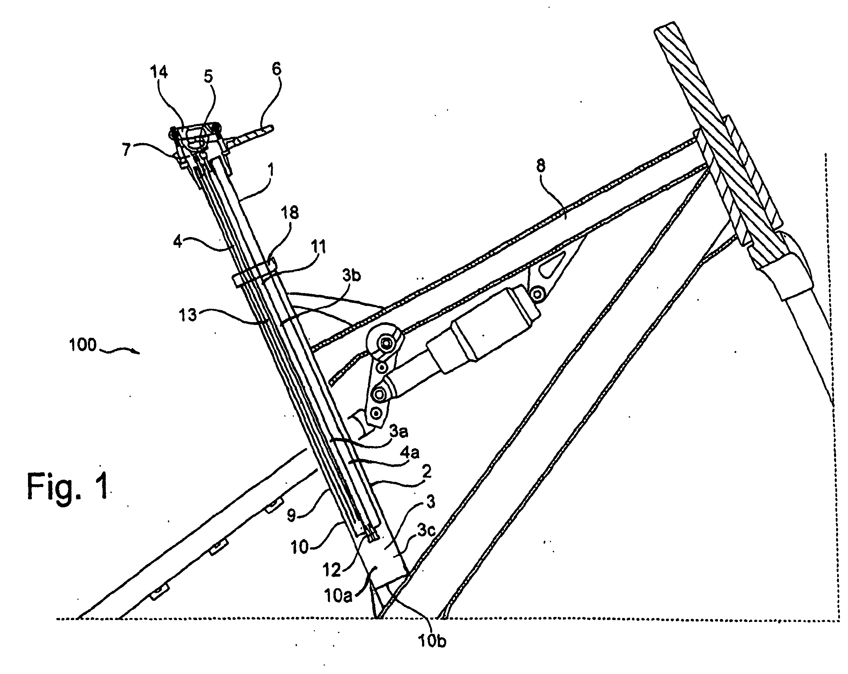

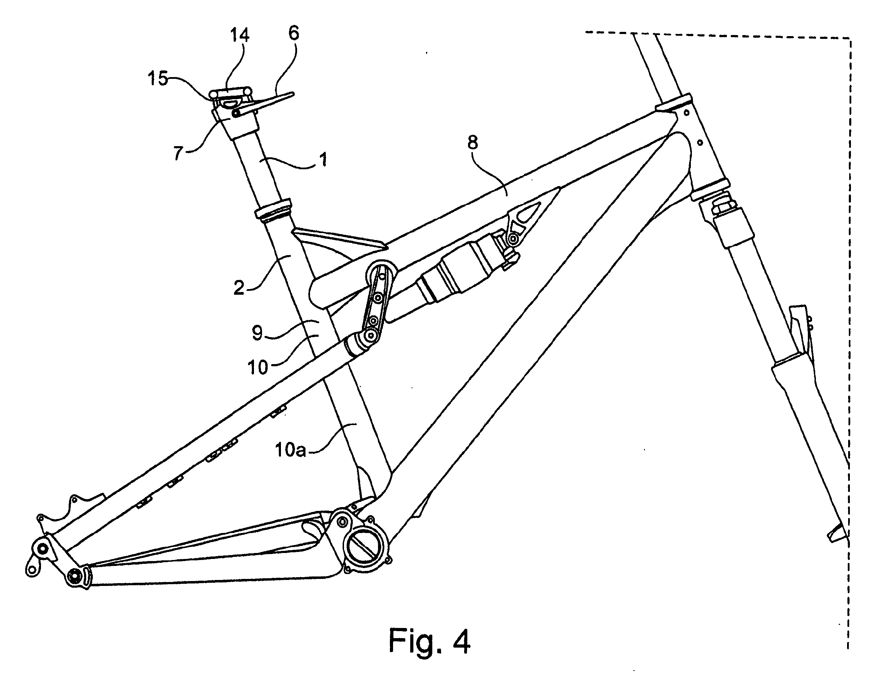

Die folgenden Ausführungen beziehen sich zunächst ausschließlich auf das in den Fig. 1 bis 6 gezeigte Ausführungsbeispiel.

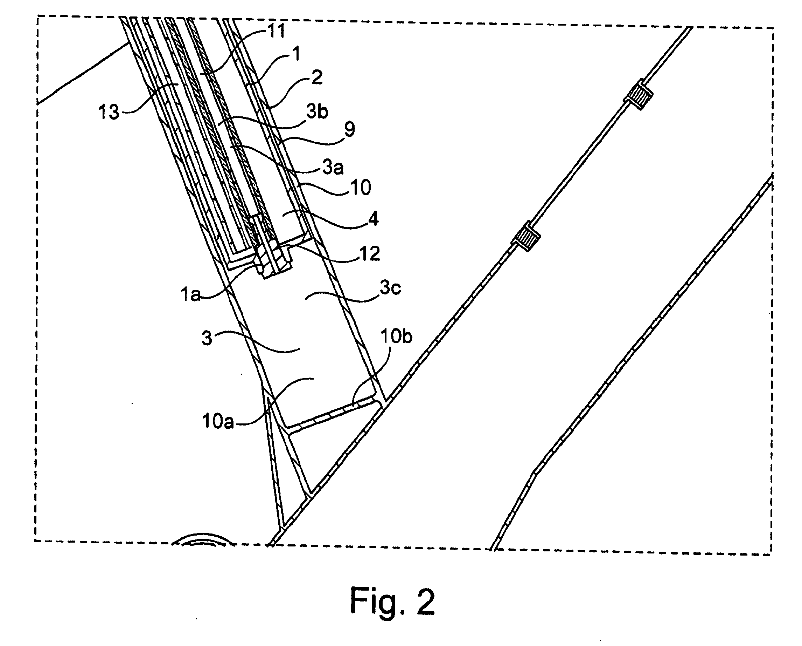

Die Stützkammer 3 erstreckt sich in dem in den Fig. 1 bis 6 gezeigten Ausführungsbeispiel von dem unteren Bereich 10a des Sattelrohres 10 in das innere Teleskoprohr 1. In dem unteren Bereich 10a des Sattelrohres werden die Wände der Stützkammer 3 durch das Sattelrohr 10 gebildet, die Stützkammer 3 hat in diesem Bereich daher den Durchmesser des Sattelrohres 10. In dem inneren Teleskoprohr 1 erstreckt sich die Stützkammer 3 in ihrem oberen Bereich 3a lediglich in Form eines Kanals 11, dessen Durchmesser erheblich kleiner als der Durchmesser des inneren Teleskoprohres 1 ist. Im gezeigten Ausführungsbeispiel ist der Durchmesser des Kanals 11 lediglich etwa ein Drittel so groß wie der Durchmesser des inneren Teleskoprohres 1. Der Kanal 11 erstreckt sich durch die gesamte Länge des inneren Teleskoprohres 1. Der Kanal 11 verbindet also den unteren Bereich des Sattelrohres 10a mit dem Kopf 7 der Sattelstütze. Wie insbesondere Fig. 2 zeigt, weist das innere Teleskoprohr 1 an seiner Unterseite eine Öffnung 1a auf, mit der der Kanal 11 über ein Anschlussstück 12 verbunden ist. Das Ventil 5 ist im Sattelstützenkopf 7 an dem Kanal 11 angeordnet. Daher kann es über die Ventilbetätigungsvorrichtung 6, die ebenfalls am Sattelstützenkopf 7 angeordnet ist, über kurze Übertragungswege betätigt werden.

Die Ausweichkammer 4a ist durch das innere Teleskoprohr 1 gebildet. Es ist ein unten offener Verbindungskanal 13 vorgesehen, der nahezu durch die gesamte Länge des inneren Teleskoprohres 1 verläuft. Der Verbindungskanal 13 hat im gezeigten Ausführungsbeispiel einen ähnlichen Durchmesser wie der Kanal 11 der Stützkammer 3 und ist wie dieser stets ausschließlich mit Öl 4 gefüllt.

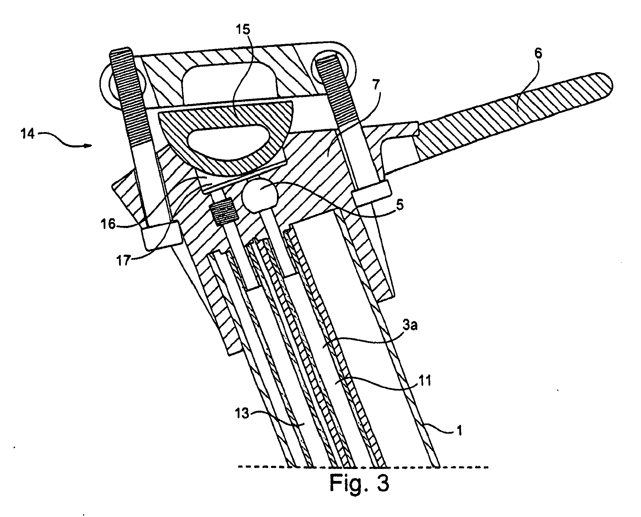

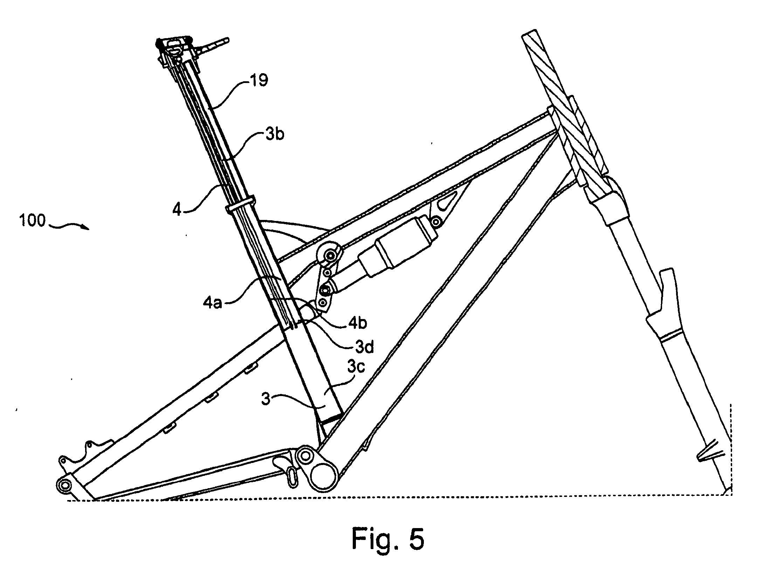

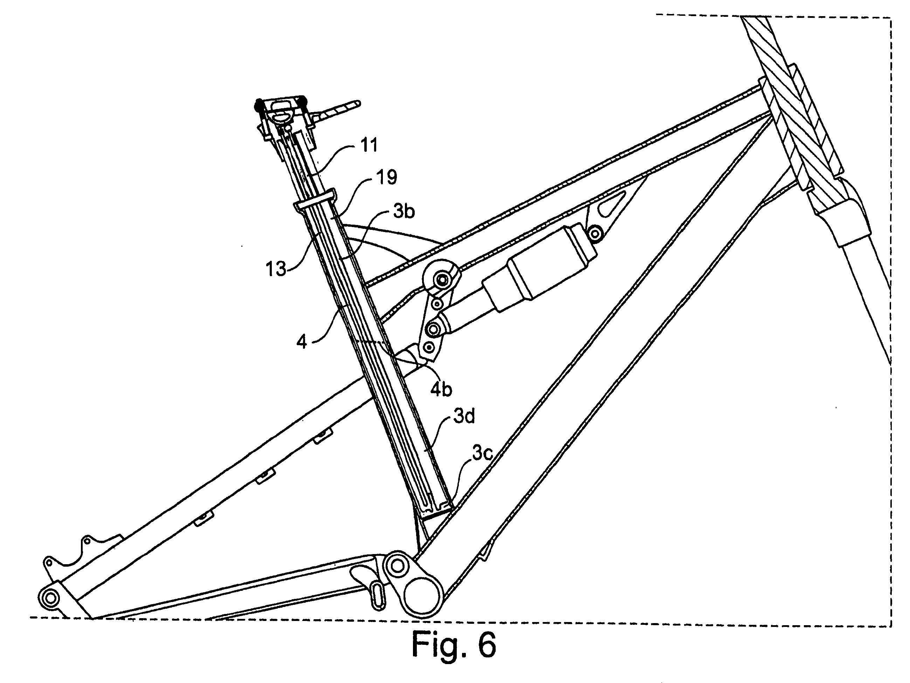

Wie insbesondere Fig. 3 zeigt, ist am oberen Ende des inneren Teleskoprohres 1, also am Kopf 7 der Sattelstütze eine Sattelbefestigungsvorrichtung 14 vorgesehen. Diese umfasst ein Klemmstück 15, welches auf einem Klemmstücklager 16 gelagert ist. Das Klemmstücklager 16 bildet gleichzeitig die Flüssigkeitsumlenkung 17, die den oberen Bereich der Stützkammer 3a, also den Kanal 11 mit dem Verbindungskanal 13 verbindet. Der Verbindungskanal 13 verbindet also das Ventil 5 (mittels der Flüssigkeitsumlenkung 17) mit dem untersten Bereich der Ausweichkammer 4a. Wie insbesondere die Figuren 5 und 6 zeigen, ist in der Ausweichkammer 4a stets Öl 3d vorhanden. Das untere offene Ende des Verbindungskanals 13 ist stets unterhalb des Öls-Standes 4b angeordnet. Hierdurch ist ausgeschlossen, dass Luft 19 in den Verbindungskanal 13 und auf diesem Weg in die Stützkammer 3 gelangt. Bei geöffnetem Ventil 5 und belastetem Sattel weicht das Öl 3b, 3c der Stützkammer 3 in die Ausweichkammer 4a aus, wo es die dort vorhandene Luft 19 komprimiert. Der Kanal 11 und der Verbindungskanal 13 werden durch Rohre gebildet.

Die Dichtung 18 im oberen Bereich des Sattelrohres 10 zwischen dem inneren Teleskoprohr 1 und dem Sattelrohr 10 verhindert ein Austreten des Öls.

Der untere Bereich des Sattelrohres 10a unterscheidet sich von einem gewöhnlichen Sattelrohr lediglich durch eine Verschlusswand 10b, die den unteren Bereich des Sattelrohres 10a abdichtet.

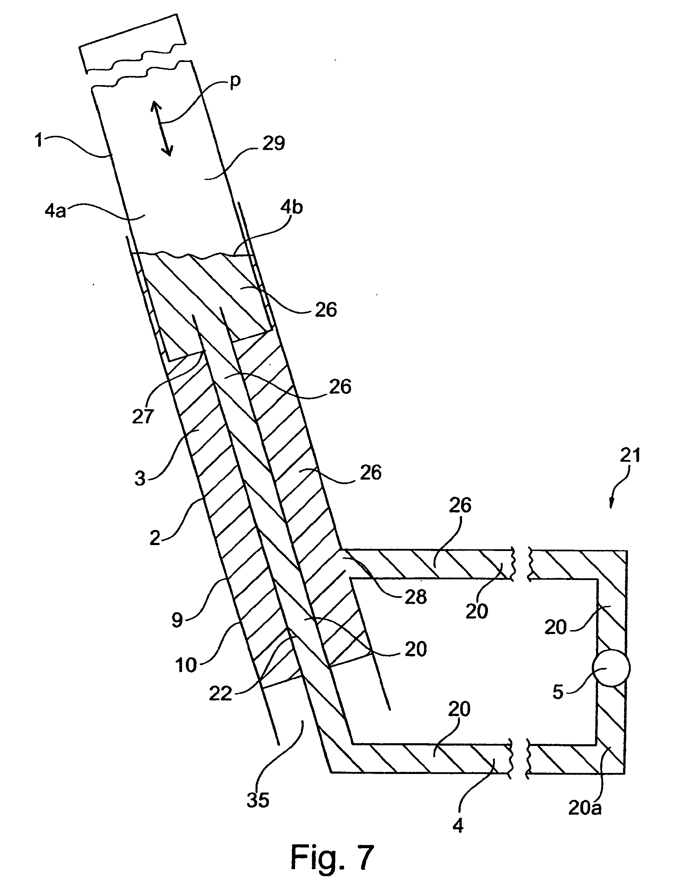

Die nunmehr folgenden Ausführungen beziehen sich, von ausdrücklichen Ausnahmen abgesehen, ausschließlich auf das in den Fig. 7 bis 10 gezeigte Ausführungsbeispiel.

Fig. 7 skizziert das Prinzip eines weiteren Ausführungsbeispiels der erfindungsgemäßen Sattelstütze 100. Wie in dem oben dargestellten Ausführungsbeispiel umfassen die Wände der Stützkammer 3 das äußere Teleskoprohr 2, welches seinerseits das Sattelrohr 10 eines Fahrradrahmens 8 umfasst. Auch hier wird zudem die Ausweichkammer 4a durch das innere Teleskoprohr 1 gebildet. Anders als in dem oben dargestellten Ausführungsbeispiel erfolgt die wahlweise Verbindung von Stützkammer 3 und Ausweichkammer 4a hier jedoch durch eine Verbindungsleitung 20. Diese verläuft teilweise außerhalb der Sattelstütze 100.

Die Verbindungsleitung 20 beginnt bei einem durch eine Öffnung in dem Sattelrohr 10 gebildeten Austritt 28. Sie verläuft von dort, gebildet durch Hydraulikleitungen, die Hydraulikschläuche 20a umfassen, bis in den Lenkerbereich 21 des Fahrrades. An dem nicht dargestellten Lenker des Fahrrades ist das Ventil 5 und eine nicht gezeigte Ventilbetätigungsvorrichtung vorgesehen, mittels derer die Durchgängigkeit der Verbindungsleitung 20 wahlweise hergestellt oder aufgehoben werden kann. Von dem Ventil 5 verläuft die Verbindungsleitung 20 zurück zu der Sattelstütze 100. Sie verläuft durch die Sattelrohröffnung 35 und tritt in Form des Führungsrohres 22 in die durch das Sattelrohr gebildete Stützkammer 3 ein. Das Führungsrohr 22 weist etwa ein Drittel des Durchmessers des Sattelrohrs 10 auf. Es weist im Wesentlichen die gleiche Längsachse wie das Sattelrohr 10 auf. Das Führungsrohr 22 tritt, ohne eine Verbindung zu der Stützkammer 3 herzustellen, durch die Durchbrechung 27 in das innere Teleskoprohr 1 und damit die Ausweichkammer 4a ein und endet dort.

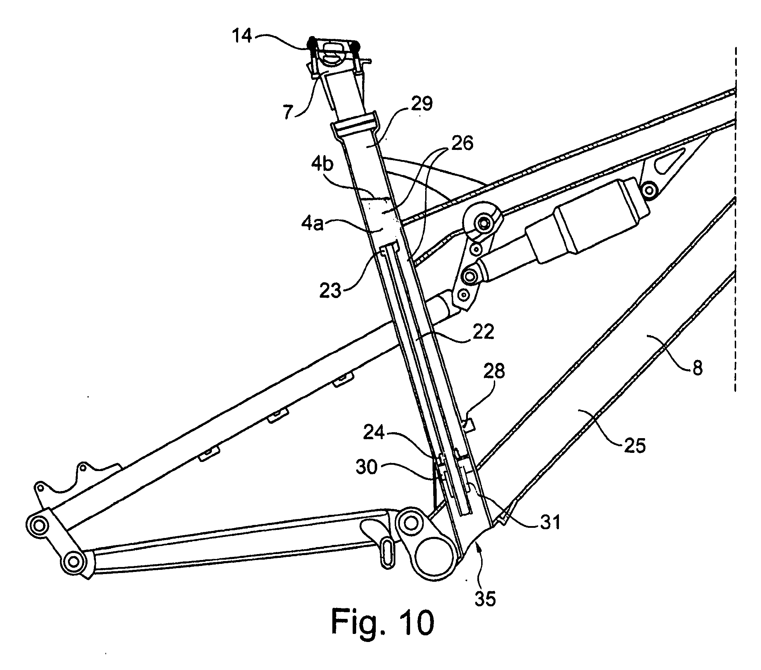

Die Stützkammer 3 und die Verbindungsleitung 20 sind, wie die Schraffierung in Fig. 7 zeigen soll, stets vollständig mit Öl 26 oder einem anderen nicht oder nur schwer komprimierbaren, bevorzugt flüssigen Medium gefüllt. Die Ausweichkammer 4a ist, wie der in Fig. 7 und 10 eingezeichnete Ölstand 4b zeigt, teilweise mit Öl 26 gefüllt. In der Ausweichkammer 4a ist zudem ein komprimierbares, bevorzugt gasförmiges Medium, beispielsweise Luft 29 vorgesehen. Der Pfeil p in Fig. 7 verdeutlicht die Bewegung des inneren Teleskoprohres 1 während der Verstellung der Sattelstütze 100.

Das innere Teleskoprohr 1 weist bei beiden gezeigten Ausführungsbeispielen einen geringfügig kleineren Durchmesser als das äußere Teleskoprohr 2 auf, unter anderem um ein ineinander Gleiten der beiden Rohre zu ermöglichen. Um ein Austreten von Öl 26 in dem oberen Bereich der Sattelstütze 100 zwischen dem inneren und äußeren Teleskoprohr zu verhindern, ist am oberen Ende des äußeren Teleskoprohrs 2 beider gezeigten Ausführungsbeispiele eine Dichtungsvorrichtung 32 vorgesehen, die in dem in den Figuren 7 bis 10 gezeigten Ausführungsbeispiel zwei O-Ringe umfasst.

Das innere Teleskoprohr 1 ist an seiner Unterseite mit Ausnahme der Durchbrechung 27 verschlossen. Die Durchbrechung 27 wird weitgehend durch das durch die Durchbrechung 27 geführte Führungsrohr 22 ausgefüllt, über welches die Durchbrechung 27 während des Verstellvorgangs gleitet. Die Durchbrechung 27 ist beispielsweise mittels einer Kolbenstangendichtung abgedichtet.

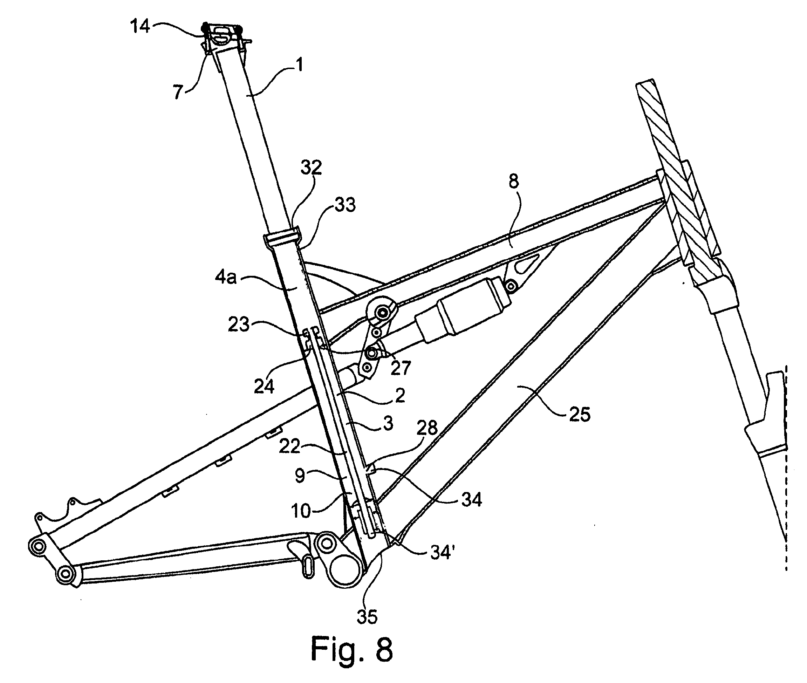

Insbesondere Fig. 8 verdeutlicht die Bewirkung des oberen Endanschlags. Der Auszug des inneren Teleskoprohrs 1 aus dem äußeren Teleskoprohr 2 wird durch den am Ende des Führungsrohrs 22 vorgesehen Anschlagsvorsprung 23 begrenzt, der bei vollständig ausgezogener Sattelstütze an dem Gegenanschlag 24 zur Anlage kommt, der am unteren Ende des inneren Teleskoprohrs 1 um die Durchbrechung 27 herum angeordnet ist.

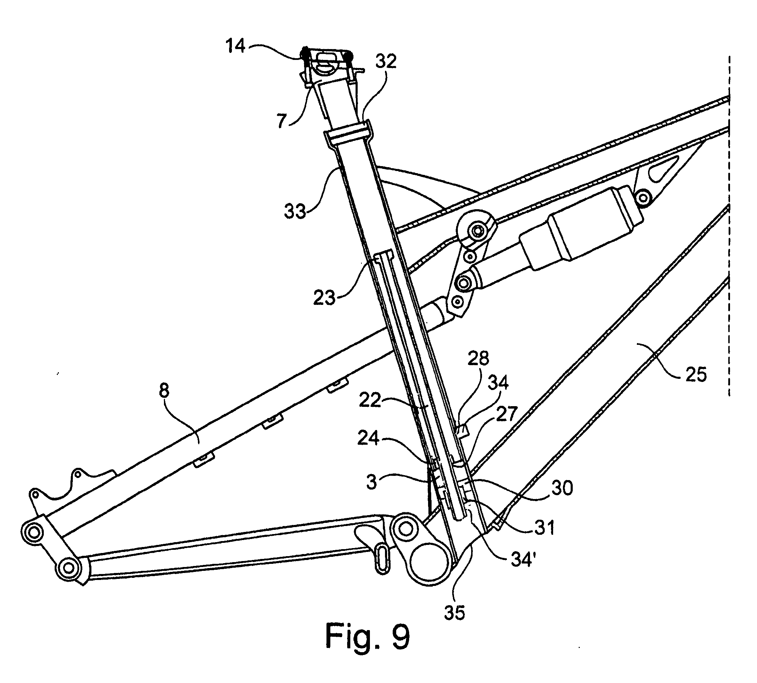

Wie unter anderem Fig. 9 zeigt, ist das Führungsrohr 22 mittels eines Einsatzes 30 und einer Konusmutter 31 in dem äußeren Teleskoprohr 2 geklemmt. Nach Lösen der Konusmutter 31 kann das Führungsrohr 22 nach oben oder unten verschoben werden und durch das hiermit erfolgende Verschieben des Anschlagsvorsprung 23 die maximale Sattelhöhe, die sich bei entlastetem Sattel und geöffnetem Ventil 5 einstellt, vergrößert oder verkleinert werden.

Die Stützkammer 3 ist an ihrem unteren Ende dicht verschlossen. Im Zusammenspiel mit den übrigen Dichtungsvorrichtungen ergibt sich hieraus eine nur durch die Verbindungsleitung 20 bzw. das Ventil 5 wahlweise aufhebbare Abdichtung der Stützkammer 3.

Der Einsatz 30 bewirkt zudem den unteren Endanschlag. Wie insbesondere Fig. 10 verdeutlicht, wird das Einschieben des inneren Teleskoprohrs 1 in das äußere Teleskoprohr 2 durch das Anschlagen der unteren Seite des inneren Teleskoprohrs 1 an dem Einsatz 30 begrenzt.

An dem Austritt 28 des äußeren Teleskoprohrs 2 ist ein zylindrischer Fortsatz angeordnet, der, wie auch das untere Ende des Führungsrohrs 22, ein Außengewinde 34, 34' aufweist, zur Herstellung der Verbindung mit den Hydraulikschläuchen 20a. Es ist denkbar, die Hydraulikschläuche 20a zumindest teilweise innerhalb der Rahmenrohre zu führen.

Bei geschlossenem Ventil 5 kann kein Öl aus der Stützkammer 3 entweichen und die Sattelstütze 100 ist in der gewählten Höhe blockiert. Um die Sattelstütze zu verstellen, muss das Ventil 5 geöffnet werden. Befindet sich die Sattelstütze noch nicht an ihrem unteren Anschlag und wird sie (beispielsweise durch das Körpergewicht des Nutzers) belastet, dann strömt Öl 26 von der Stützkammer 3 durch die Verbindungsleitung 20 in die Ausweichkammer 4a. Gleichzeitig schiebt sich das innere Teleskoprohr 1 in das äußere Teleskoprohr 2, wodurch sich die Gesamtlänge der Sattelstütze 100 und damit die Sattelhöhe verringert. Das die Ausweichkammer 4a bildende innere Teleskoprohr 1 bildet, mit Ausnahme der Durchbrechung 27, einen geschlossenen Raum. Durch das Einströmen des Öls 26 in die Ausweichkammer 4a wird die Luft 29, die sich in dieser befindet, daher komprimiert. Wird die Sattelstütze bei geöffnetem Ventil 5 entlastet, dann wirkt die komprimierte Luft 29 als Feder, indem sie das Öl 26 durch die Verbindungsleitung 20 zurück in die Stützkammer 3 drückt (sofern die Sattelstütze nicht bereits an ihrem oberen Endanschlag angekommen ist). Hierdurch wird das innere Teleskoprohr 1 und mit diesem der Sattel angehoben. Die Sattelstütze kann in beliebiger Höhe, also stufenlos, durch Schließen des Ventils 5 blockiert werden.

In allen gezeigten Ausführungsbeispielen kann zur Führung der Teleskoprohre 1, 2 ineinander und Verminderung der Reibung zwischen den Teleskoprohren 1, 2 eine Gleitbuchse 33 aus einem Material vorgesehen sein, welches in der Paarung mit dem Material des inneren Teleskoprohrs 1 einen geringen Reibungskoeffizienten bewirkt, beispielsweise spezieller Kunststoff.

In dem in den Figuren 7 bis 10 gezeigten Ausführungsbeispiel trifft das Sattelrohr 10 in kurzem Abstand zu dem Tretlagerrohr auf das Unterrohr 25 und durchquert dieses. Das Innere des Sattelrohrs 10 ist daher durch seine untere Öffnung 35 von unten frei zugänglich. Hierdurch können Elemente der Sattelstütze 100, wie etwa das Führungsrohr 22 komfortabel montiert, gewartet und repariert werden.

### Bezugszeichenliste:

- 100: Hydraulische Teleskopsattelstütze
- 1: Inneres Teleskoprohr
- 1 a: Öffnung
- 2: Äußeres Teleskoprohr
- 3: Stützkammer
- 3a: Oberer Bereich der Stützkammer
- 3b: Öl
- 3c: Öl
- 3d: Öl
- 4: Öl
- 4a: Ausweichkammer
- 4b: Öl-Stand
- 5: Ventil
- 6: Ventilbetätigungsvorrichtung
- 7: Sattelstützenkopf
- 8: Fahrradrahmen
- 9: Rahmenrohr
- 10: Sattelrohr
- 10a: Unterer Bereich des Sattelrohres
- 10b: Verschlusswand
- 11: Kanal
- 12: Anschlussstück
- 13: Verbindungskanal
- 14: Sattelbefestigungsvorrichtung
- 15: Klemmstück
- 16: Klemmstücklager
- 17: Flüssigkeitsumlenkung
- 18: Dichtung
- 19: Luft
- 20: Verbindungsleitung
- 20a: Hydraulikschläuche
- 21: Lenkerbereich
- 22: Führungsrohr
- 23: Anschlagsvorsprung
- 24: Gegenanschlag
- 25: Unterrohr
- 26: Öl
- 27: Durchbrechung
- 28: Austritt
- 29: Luft
- 30: Einsatz
- 31: Konusmutter
- 32: Dichtungsvorrichtung
- 33: Gleitbuchse
- 34,34': Außengewinde
- 35: Sattelrohröffnung
- p: Pfeil

## Patentansprüche

1. Hydraulische Teleskop-Sattelstütze (100) insbesondere für einen Fahrradrahmen (8), mit einem inneren Teleskoprohr (1), mit einem äußeren Teleskoprohr (2), mit einer Stützkammer (3) und einer mit dieser durch ein Ventil (5) wahlweise verbindbaren Ausweichkammer (4a), mit einer Ventilbetätigungsvorrichtung (6), mit einem Sattelstützenkopf (7) und mit einer Sattelbefestigungsvorrichtung (14),
**dadurch gekennzeichnet,**
**dass** die Wände zumindest einer der beiden Kammern (3, 4a) zumindest auch das äußere Teleskoprohr (2) umfassen und das äußere Teleskoprohr (2) das Sattelrohr (10) eines Fahrradrahmens umfasst.

2. Sattelstütze nach Anspruch 1, **dadurch gekennzeichnet, dass** die Ausweichkammer (4a) durch das innere Teleskoprohr (1) gebildet wird.

3. Sattelstütze nach Anspruch 1 oder 2, **dadurch gekennzeichnet, dass** die Ausweichkammer (4a) zumindest auch mit Gas gefüllt ist.

4. Sattelstütze nach einem der Ansprüche 1 bis 3, **dadurch gekennzeichnet, dass** in dem unteren Bereich (10a) des Sattelrohrs (10) abgesehen von einer Verschlusswand (10b) keine weiteren Bauelemente vorgesehen sind.

5. Sattelstütze nach einem der Ansprüche 1 bis 4, **dadurch gekennzeichnet, dass** das Ventil (5) in dem Kopf (7) der Sattelstütze angeordnet ist.

6. Sattelstütze nach einem der Ansprüche 1 bis 5, **dadurch gekennzeichnet, dass** die Stützkammer (3) einen oberen Bereich (3a) aufweist, der einen Kanal (11) im inneren Teleskoprohr (1) umfasst und dass ein Verbindungskanal (13) vorgesehen ist, der von dem Ventil (5) im Sattelstützenkopf (7) bis in den untersten Bereich der Ausweichkammer (4a) führt.

7. Sattelstütze nach einem der Ansprüche 1 bis 6, **dadurch gekennzeichnet, dass** die Sattelbefestigungsvorrichtung (14) ein Klemmstück (15) umfasst, welches auf einem Klemmstücklager (16) im Sattelstützenkopf (7) gelagert ist und dieses Klemmstücklager (16) eine Flüssigkeitsumlenkung (17) umfasst.

8. Sattelstütze nach einem der Ansprüche 1 bis 3, **dadurch gekennzeichnet, dass** eine Verbindungsleitung (20) zur wahlweisen Verbindbarkeit der Stützkammer (3) mit der Ausweichkammer (4a) vorgesehen ist und diese zumindest auch außerhalb der Sattelstütze (100) verläuft.

9. Sattelstütze nach Anspruch 8, **dadurch gekennzeichnet, dass** die Verbindungsleitung (20) bis in den Lenkerbereich (21) eines Fahrrades verläuft und das Ventil (5) in diesem Bereich (21) angeordnet ist.

10. Sattelstütze nach Anspruch 8 oder 9, **dadurch gekennzeichnet, dass** die Verbindungsleitung (20) Hydraulikschläuche (20a) umfasst.

11. Sattelstütze nach einem der Ansprüche 8 bis 10, **dadurch gekennzeichnet, dass** die Verbindungsleitung (20) auch innerhalb der Sattelstütze (100) verläuft und dort ein Führungsrohr (22) umfasst, welches im äußeren Teleskoprohr (2) einstellbar befestigt ist und von dem äußeren Teleskoprohr (2) in das innere Teleskoprohr (1) reicht.

12. Sattelstütze nach Anspruch 11, **dadurch gekennzeichnet, dass** ein oberer Endanschlag der Sattelstütze (100) vorgesehen ist, der durch das Zusammenwirken eines Vorsprungs (23) des Führungsrohrs (22) mit einem Gegenanschlag (24) im inneren Teleskoprohr (1) bewirkt wird.

13. Sattelstütze nach einem der Ansprüche 1 bis 3 und 8 bis 12, **dadurch gekennzeichnet, dass** der Fahrradrahmen (8) ein Sattelrohr (10) und ein Unterrohr (25) aufweist und das Sattelrohr (10) durch das Unterrohr (25) hindurchreicht.

14. Fahrradrahmen, der eine Sattelstütze (100) nach einem der Ansprüche 1 bis 13 aufweist.

15. Fahrrad, das eine Sattelstütze (100) nach einem der Ansprüche 1 bis 14 aufweist.
